# EUROPEAN PATENT APPLICATION

(11) **EP 4 682 121 A1**
(43) Date of publication of application: **21.01.2026**
(21) Application number: 24189613.3
(22) Date of filing: 19.07.2024
(51) Int. Cl.: C03C 1/00, C03C 3/087

(54) **CALCIUM AND MAGNESIUM COMPOSITION WITH LOW DUST AND IMPROVED CARBON-FOOTPRINT FOR USE IN A GLASS MANUFACTURING**

(71) Applicant: S.A. LHOIST RECHERCHE ET DEVELOPPEMENT, 1342 Ottignies-Louvain-la-Neuve (BE)
(72) Inventor: LORGOUILLOUX, Marion, 7110 Strépy-Bracquegnies (BE); CARLEER, Pierre, 1410 Waterloo (BE)
(74) Representative: Calysta NV

(57) **Abstract**

The invention relates to an advantageous composition for its use in a glass manufacturing process, comprising (i) at least a calcium raw material and (ii) at least a calcium-magnesium raw material, with when CaO is ≥ 4*MgO in said composition, said calcium-magnesium raw material is hydrated dolime; and when CaO is < 4*MgO in said composition , said calcium raw material is hydrated lime.

## Description

### Technical Field

The present invention is in the context of the glass industry and, in particular, in the domain of glass manufacturing which includes melting a glass batch (or a mixture of raw materials) in a glass furnace following by a fining in order to produce glass articles, like glass sheets or glass containers.

In particular, the invention relates to a composition that is particularly valuable for its use in a glass manufacturing process, as a Ca-Mg raw material or as a glass batch, and that allows reducing CO₂ emissions (lower CO₂ footprint) while properly addressing the issues of dust emissions during the glass batch preparation, its handling and its transport.

The present invention also relates to the particular uses of said composition in a specific float or container glass manufacturing process, and to a process of preparing a glass batch.

### Prior art

Glass articles, in particular silicious or soda-lime glass articles, are made commonly by melting at high temperatures (e.g. 1200-1500°C) a glass batch comprising mainly silica sand, limestone (i.e. calcium carbonate) and/or dolomite, sometimes called dolostone (i.e. calcium-magnesium carbonate), and soda ash (i.e. sodium carbonate). Depending notably on the glass furnace, the targeted properties and use of the final glass produced, the glass batch comprises these main raw materials in variable amounts and generally, it also comprises other raw materials like, for example, potassium, aluminum and/or boron source(s), cullet, and additive(s) (coke, sulphates,...) and coloring agents.

As conventional glass melting processes have used for decades essentially carbonates as sources of sodium, calcium and magnesium, glass industry is considered as an important direct emitter of CO₂ occurring from the decarbonization of these raw materials during the melting/fining.

In addition to this, CO₂ released during glass melting generates bubbles (foaming) inside the glass melt, therefore a further process of fining is necessary to guarantee the removal of all these bubbles before cooling down the glass.

Finally, the glass manufacturing process is also greatly energy-demanding, to melt the solid glass batch and maintain the melt at high temperatures for fining, thereby generating also indirect CO₂ emissions.

Though, CO₂ is an important societal and economical challenge for European industrial players due to the transition to low CO₂ technologies. The global warming, the requirements for CO₂ emissions reduction, CO₂ taxes and the energy prices have put more and more pressure on glass manufacturers in particular and represent a current or future threat in their business competitivity. In that context, the glass industry has invested a lot since years in developments and actions in order to reduce energy consumption and/or CO₂ emissions of its manufacturing processes.

One of the levers identified to reduce the direct and indirect CO₂ emissions per ton of produced glass relies on the use of alternative raw materials, in particular the replacement of carbonates by a corresponding decarbonated material.

In particular, it is already known in the art to replace limestone (i.e. calcium carbonate) by its corresponding oxide (quicklime, i.e. CaO). It is also known, but in a lesser extent, to replace dolomite (i.e. calcium and magnesium carbonate) by its corresponding oxide (dolime, i.e. CaO.MgO).

The main advantage with the use of limestone and/or dolomite as calcium and/or calcium-magnesium source in a glass batch, next to their low costs, is the fact that these products have high densities and show rather coarse grains (up to 3 or even 5 mm) and therefore emit very limited amounts of dust during handling, mixing with the other glass batch raw materials, transport through conveyors, introduction in the furnace, etc. Moreover, limestone and dolomite are inert in the presence of water, meaning that if the glass manufacturer anyhow wishes to further decrease dust emissions, the batch can be moisturized without any issue (in particular, without any chemical reactions).

Replacing limestone by quicklime (or dolomite by dolime, or both) in a glass batch may at first sight not seem to be a solution to reduce CO₂ emissions as the CO₂ from the limestone and/or dolomite will anyway be released, as quicklime and dolime are manufactured by burning limestone or dolostone (or crude dolomite) in a furnace called commonly "lime kiln" where the carbonates are converted into oxides and CO₂. However, it is known in the art that the energy efficiency of a lime kiln is higher than that of a glass furnace, meaning that the energy required to decompose 1 ton of limestone or dolostone will be lower in a lime kiln than in a glass furnace, which implies consequently less CO₂ emissions from fuels.

Moreover, it appears that the melting (and fining) kinetics of a glass batch made with quicklime and/or dolime as calcium and/or calcium and magnesium source is increased compared to that of a glass batch made with limestone and/or dolostone. This means that, in a given glass furnace at a given temperature, the pull can be increased and therefore, the energy consumption as well as the CO₂ emitted per ton of glass can be decreased. Nevertheless, replacing limestone by quicklime and/or dolostone by dolime in a glass batch leads to other issues, particularly related to their reactivity with water and associated dust emissions.

In a glass manufacturing process, dust is potentially emitted i) in the conveying and dosing circuits of the raw materials upstream of the batch mixer, ii) in the batch mixer, iii) in the batch conveying circuits upstream of the furnace, iv) when the batch is introduced into the furnace, but also v) in the furnace itself. Dust emissions may therefore have an impact at different locations and generate adverse effects like losses of raw materials, pilling-up in /clogging of the fumes ducts and heat exchangers, reduction of the lifetime of the refractories, increase of cleaning requirements, creation of a need for dust removal circuits, generation of health hazards for workers, etc.

The particle size of quicklime and/or dolime can be adjusted by several means (milling, screening, classification...) in order to manufacture a product that is low in terms of dust emissions. However, quicklime and dolime have a lower mechanical resistance that limestone and dolostone, and therefore, after their manufacturing with a well-controlled particle size, they are prone to generate more fines during transport, handling, loading... which results in the end, especially upon arrival at customer site, to increased dust emissions upstream of the batch mixer compared to when using limestone and dolostone.

Glass batch moisturization is a very common practice to reduce dust emissions in general in the glass industry and also avoid segregation during batch storage. However, water and quicklime react together exothermically, which results in a release of heat that makes the batch difficult to handle. Moreover, this hydration reaction (or slaking) generates calcium hydroxide particles (hydrated lime) that have a smaller granulometry and are lighter ("fines") than the initial oxide and leads thus to the generation of additional fine particles and increased significantly dust emissions. Moreover, one additional drawback of such use of water increases slightly the energy consumption, due to the need of evaporation of this added water during the melting step.

In many cases, tendency would be to add more water to the batch during mixing to circumvent these difficulties. However, more water means more hydration, therefore more heat released, more fine particles and more energy to decompose the hydrated compounds in the furnace.

The issue of quicklime reactivity with water could be solved by using hydrated lime (Ca(OH)₂) instead but this solution has not been adopted in the art because hydrated lime is known to have a smaller granulometry than quicklime and therefore to emit more dust.

One way to reduce hydration of quicklime/dolime in a glass batch is to screen out the fine particles in order to reduce the points of contact between the lime particles and water. This process is called herein "defillerization". However, this generates a by-product (fines) for which other applications have to be found, otherwise it represents a loss for the supplier

Several solutions to the above issues when replacing limestone by quicklime have been proposed in the art. They all consider the total replacement of limestone by quicklime combined with other specific aspects concerning the manufacturing process and/or adapted features of the quicklime itself. Quicklime, which the chemical composition is mainly calcium oxide, CaO, is usually obtained by calcination of limestone (mainly CaCOs).

Hence, in document US4028131, it is proposed to totally replace limestone by quicklime or "burnt lime" (CaO) and combine it with a specific amount of caustic soda (e.g. a 70% concentrated solution at 80°C) in the glass batch. According to US4028131, there is a synergistic effect of the use of quicklime with caustic soda, which reduces the disadvantage arising from the use on fine powders of quicklime, does not require sizing of the material and allows an increase in speed of fusion and fining. However, the use of concentrated solution of caustic soda brings some drawbacks and should be avoided, when possible, in industrial process.

In document WO2019/002802A1, it is proposed to totally replace limestone by quicklime in a glass batch together with a specific feature of the process. Hence, WO2019/002802A1 discloses a process for manufacturing glass comprising the preparation of a glass batch, in which water, sand and sodium carbonate are mixed in specific proportions and, after a delay (e.g. a time of at least 10 minutes or preferably at least one hour), calcium oxide is added to the batch. According to the applicant, such a specific process allows to decrease energy consumption, amount of CO₂ release. Moreover, issues regarding batch dust are also reduced (the initial particle size of the constituents introduced into the batch would be substantially conserved). However, delaying the addition of a specific raw material (by one hour, for example) compared to the others represents an additional operational burden for the glass workers and a delay of the overall process.

Next to that, it is to be noted that replacing dolomite by its corresponding oxide (dolime) leads to the same issues as those explained in relation with the replacement of limestone by quicklime.

Finally, it is also known from a European patent application EP23174026.7 (not yet published) that, by combining hydrated compound(s) (hydrated lime and/or hydrated dolime) and carbonate compound(s) (limestone and/or dolomite) in a glass raw material in specific relative amounts, it is possible to reach a low dust emission during handling, transportation and storage, either alone or in a glass batch, despite the use of hydroxides/hydrates. In particular, it is disclosed only a partial replacement of limestone by hydrated lime and/or a partial replacement of dolomite by hydrated dolime.

Therefore, in the current environmental and economic situation, there is still a need in the glass industry to provide an alternative/improved calcium-magnesium-containing composition (i) leading to reduced CO₂ emissions (direct and indirect) while (ii) having a low dust emission during its handling, its conveying and its dosing upstream of the glass batch mixer, even though it contains fine particles, (iii) permitting to moisturize the glass batch without generating additional fine particles and (iv) allowing to be combined with other raw materials (no sequenced or delayed addition).

### Objectives of the invention

The present invention has notably the objective of overcoming the cited drawbacks of the prior art.

More precisely, an objective of the invention is to provide an alternative calcium-magnesium composition, that is valuable as a raw material and/or as a glass batch to be introduced in a glass manufacturing/ process.

In particular, an objective of the invention is to provide a calcium-magnesium composition, that, when added in a glass batch or used as a glass batch, allows reducing the CO₂ emission of the glass manufacturing process by ton of glass produced.

Another objective of the invention is to provide a calcium-magnesium composition, that, when added in a glass batch or used as a glass batch, allows increasing energy efficiency and improving the kinetics of the glass manufacturing process.

Still another objective of the invention is to provide a calcium-magnesium composition that has a low dust emission, in particular during its handling, its conveying and its dosing, even though it contains fine particles.

Still another objective of the invention is to provide a calcium-magnesium composition that may be combined with other raw materials if added in a glass batch) and which permits moisturizing the batch without significant issues in and downstream of the glass batch mixer (dust, reactivity, etc.).

Finally, another objective of the invention is to provide a solution to the disadvantages of the prior art that is simple, cheap and easy to implement.

### Description of the invention

The invention relates to a composition for its use in a glass manufacturing process, said composition comprising (i) at least a calcium raw material and (ii) at least a calcium-magnesium raw material, with :
- When CaO ≥ 4*MgO in said composition, then said at least a calcium-magnesium raw material is hydrated dolime;
- when CaO < 4*MgO in said composition, then said at least a calcium raw material is hydrated lime;

CaO being the total amount of calcium expressed as CaO in weight percentage in said composition and MgO being the total amount of magnesium expressed as MgO in weight percentage in said composition.

Hence, the invention is based on a novel and inventive approach. In particular, the inventors have evidenced that, depending on the respective calcium and magnesium contents between calcium and magnesium in the composition, it is possible to replace totally one of the commonly used carbonates (i.e. limestone or dolomite) by its corresponding hydrated version (hydrated lime or hydrated dolime) and to obtain a composition with a low dust emission during handling, transportation and storage, either alone or in a glass batch, despite the use of hydrated Ca and/or Ca-Mg raw materials.

The advantageous effect of the invention on dust emissions allows the use of hydroxide(s) of calcium and/or magnesium (hydrated lime, hydrated dolime) in relatively high amounts, without having the drawbacks usually associated with the use of oxides or hydroxides exposed above and while having the added value of using (at least partially) hydrated products instead of carbonated ones (reduced CO₂ emissions, increased pull due to increased melting kinetics, ...).

The invention also relates to the use of said composition in a glass manufacturing process, with CaO < 4*MgO in said composition.

The invention also relates to the use of said composition in a glass manufacturing process, with CaO ≥ 4*MgO in said composition.

The invention also relates to a process of preparing a glass batch from glass raw materials, comprising a step of mixing at least the following raw materials to obtain said glass batch:
- silica sand,
- soda ash (namely sodium carbonate or Na₂CO₃),
- a composition according to the invention, and
- optionally, one or more secondary raw material(s).

Other features and advantages of the invention will be made clearer from reading the following description of preferred embodiments and figures, given by way of simple illustrative and non-restrictive examples.

In present specification and claims, it is well understood that when a range is indicated, the extremities are included. In addition, all the integral and subdomain values in the numerical range are expressly included as if explicitly written.

According to the invention, the composition of the invention is particularly advantageous for a use in a glass batch (as a calcium-magnesium source) or as a glass batch, in a glass manufacturing process, for producing calcium and magnesium-containing glass products, like glass sheets, glass containers or glass fibers.

By the terms "raw material" and "glass batch", it is intended herein the meaning given commonly in the related glass field and is fully understood by those skilled in the art.

By "glass manufacturing process" and as commonly adopted in the art, it is intended a process that allows manufacturing glass articles like glass sheets, esp. float glass sheets, or glass containers, through melting of a glass batch in a glass furnace following by a fining.

By "calcium raw material" in the sense of the invention, it is meant a source of calcium comprising at least 25 wt% of calcium (expressed as Ca), preferably at least 30 wt%. By "calcium-magnesium raw material" in the sense of the invention, it is meant a source of calcium and magnesium comprising at least 25 wt% of calcium and magnesium (expressed as Ca and Mg), preferably at least 30 wt%. For example, limestone and hydrated lime are a calcium raw material in the sense of the invention. For example also, dolomite and hydrated dolime are calcium raw materials in the sense of the invention. As well, feldspar, clinkerand slag are considered as calcium (or calcium-magnesium) raw materials in the sense of the invention if they comprise at least 25 wt% of calcium (expressed as Ca, or Ca-Mg), preferably at least 30 wt%. Of course, this definition does not exclude that the composition may comprise other raw materials comprising calcium and/or calcium-magnesium in lower amounts, as impurities for example.

Hence, for the sake of clarity, in the invention:
- when it is said that "calcium-magnesium raw material is hydrated dolime" or "calcium-magnesium raw material being hydrated dolime", this means that the composition comprises hydrated dolime as exclusive calcium-magnesium raw material or, in other words, that the composition does not comprise another calcium-magnesium raw material in the sense of the invention in a significant amount (namely that amount is lower than 5 wt% preferably lower than 2wt%, relative to the weight of the hydrated dolime);
- when it is said that "calcium raw material is hydrated lime" or "calcium raw material being hydrated lime", this means that the composition comprises hydrated lime as exclusive calcium raw material or, in other words, that the composition does not comprise another calcium raw material in a significant amount (namely that amount is lower than 5 wt%, preferably lower than 2wt%, relative to the weight of the hydrated lime).

For the sake of clarity also, in the invention :
- when CaO ≥ 4*MgO : dolomite as usual Ca-Mg source is totally replaced by its corresponding hydroxide (i.e. hydrated dolime) and said at least a calcium raw material is left free ; and
- when CaO < 4*MgO : limestone as usual Ca source is totally replaced by its corresponding hydroxide (i.e. hydrated lime) and said at least a calcium-magnesium raw material is left free.

For example, when CaO ≥ 4*MgO, said at least a calcium raw material may be limestone, or a mixture of limestone and hydrated lime, or slag or clinker, or any other calcium-magnesium raw materials in the sense of the invention.

For example also, when CaO < 4*MgO, said at least a calcium-magnesium raw material may be dolomite, or a mixture of dolomite and hydrated dolime, orslag or clinker,or any other calcium raw materials in the sense of the invention.

By "limestone", as commonly adopted in the art, it is meant herein calcium carbonate of the formula CaCOs. It may commonly comprise some impurities, present in the limestone minerals. Those impurities will be also present in the derived quicklime and, consequently, in the hydrated lime (together with the main component Ca(OH)₂).

By "dolomite", also called "dolostone", as commonly adopted in the art, it is meant herein calcium magnesium carbonate of the formula CaMg(CO₃)₂. It may commonly comprise some impurities, present in the dolomite minerals. Those impurities will be also present in the derived compounds, as for the limestone.

By "hydrated lime", also called "slaked lime", as commonly adopted in the art, it is meant herein calcium hydroxide of the formula Ca(OH)₂, which is commonly the industrial result of the slaking process of quicklime with water (also called hydration). It may commonly comprise some impurities, present in the initial limestone minerals from which it derives and its calcination process (e.g. contamination from the fuel). The hydrated lime according to the invention may contain calcium oxide which would not have been hydrated during slaking. It may also contain calcium carbonate, CaCO₃, that would come either from the initial limestone from which the lime is initially derived ("unburnt"), or from a partial carbonation reaction of the hydrated lime in contact with air. The calcium oxide content in the hydrated lime in the context of the present invention is generally less than 20 wt%, preferably less than 10 wt% and more preferably less than 5 wt%. The total carbonate content in the hydrated lime, expressed as CO₂, is less than 10 wt%, preferably less than 5 wt% and more preferably less than 2.5 wt%. The hydrated lime of the invention may also contain magnesium oxide, MgO or derivative phases of Mg(OH)₂ or MgCO₃, representing globally a few tens of grams per kilogram. The magnesium impurities in the hydrated lime in the context in the invention, expressed in the form of MgO, generally does not exceed 5 wt%.

By "hydrated dolime", also called "slaked dolime", as commonly adopted in the art, it is meant herein an hydroxide of calcium-magnesium, where calcium is essentially fully in its hydrated/hydroxide form and the magnesium is essentially fully or partially in its hydrated/hydroxide form, of the formula [Ca(OH)₂.xMg(OH)₂.(1-x)MgO] with x = 0 to 1. "Hydrated dolime" is commonly the industrial result of the slaking process of dolime with water (also called hydration), that can be done at atmospheric pressure or with some pressure in an autoclave. It may commonly comprise some impurities, present in the initial dolostone minerals from which it derives and its calcination process (e.g. contamination from the fuel). The hydrated dolime of the invention may also contain calcium oxide which would not have been hydrated during slaking. It may also contain calcium and/or magnesium carbonate(s) that would come either from the initial dolomite from which the dolime is derived ("unburnt"), or from a partial carbonation reaction of the hydrated dolime in contact with air. The calcium oxide content in the hydrated dolime in the context of the present invention is generally less than 10 wt%, preferably less than 7 wt% and more preferably less than 3 wt%. The total carbonate content in the hydrated lime, expressed as CO₂, is less than 10 wt%, preferably less than 5 wt% and more preferably less than 2.5 wt%.

According to an embodiment, the composition of the invention shows a dust emission defined by a Dust Area (a.u.) below 600, preferably below 500, more preferably below 450, below 400, below 350 or below 300, as measured on an amount of 50 grams of composition in a dry state and with a measurement time of 30 seconds. By composition in a dry state, it is meant herein the composition, as prepared, without adding external water. In a very preferred mode, the composition of the invention shows a dust emission defined by a Dust Area (a.u.) below 250, preferably below 200, more preferably, below 150 or even below 100, as measured on an amount of 50 grams of composition in a dry state and with a measurement time of 30 seconds. This is advantageous as this means that the composition of the invention in a dry state has an acceptable to a very good behaviour in terms of dust emissions.

According to an embodiment, the composition may comprise, next to said at least a calcium raw material and said at least a calcium-magnesium raw material, other components/raw materials chosen from the following non-exhasutive list: silica soda ash, potash, salt cake (or sodium sulfate, Na₂SO₄), nephelin, feldspar, boron oxide, barium oxide, cullet, coloring agents (cobalt oxide, chromium oxide,...), clarifying agents (cerium oxide,..), oxidizers (sodium nitrate,...), reducing agents (graphite, coke, pyrite,...), decolorizing agents (selenium, cobalt,...).

According to an embodiment, the composition comprises from 0.1 to 5 wt% of free water (expressed as H₂O). Preferably, the composition comprises from 0.3 wt% of free water, more preferably, from 0.5 wt% of free water. Preferably also, the composition comprises up to 4 wt% of free water, more preferably, up to 3 wt% or up to 2 wt% and even, up to 1.5 wt%. Preferably also, the composition comprises 0.3 to 3 wt% and, more preferably, 0.5 to 1.5 wt%.

By "free water" in the invention, it is meant water that is present as such in the composition (not in the form of hydroxide groups), as crystalline water and/or as adsorption water and/or as water brought by moisturization. The amount of free water according to the invention corresponds herein to the water content in the composition as measured by loss on ignition (or LOI) below 150°C. The free water, if comprised in the composition of the invention, is released below 150°C and the mass loss occurring below 150°C corresponds therefore to the amount of free water (expressed as H₂O) according to the invention.

Preferably, the composition of the invention comprises less than 2000 ppm, preferably less than 1800 ppm and, more preferably, less than 1500 ppm of iron (expressed as Fe₂O₃). This is advantageous as the glass manufacturers generally seek to avoid iron as much as possible in many glass articles, due to its high coloring power even at very low amounts.

Preferably also, the composition of the invention has a maximum particle size of 10 mm, more preferably 5 mm and, even, 3 mm. By "maximum particle size" in the sense of the invention, it is meant the mesh size of a screen through which more than 97%, preferably more than 98% and more preferably more than 99% of the composition can pass.

In a preferred embodiment, the composition comprises (i) at least a calcium raw material chosen amongst limestone and hydrated lime and (ii) at least a calcium-magnesium raw material chosen amongst dolomite and hydrated dolime, with :
- when CaO ≥ 4*MgO in said composition, then said at least calcium-magnesium raw material is hydrated dolime and said at least a calcium raw material is either limestone or a mixture of limestone and hydrated lime;
- when CaO < 4*MgO in said composition, then said at least a calcium raw material is hydrated lime and said at least calcium-magnesium raw material is either dolomite or a mixture of dolomite and hydrated dolime;

CaO being the total amount of calcium expressed as CaO in weight percentage in said composition and MgO being the total amount of magnesium expressed as MgO in weight percentage in said composition.

In this preferred embodiment:
- when CaO ≥ 4*MgO in the composition, then, on the one hand, dolomite as usual calcium-magnesium source is totally replaced by hydrated dolime and, on the other hand, the calcium source may be limestone or a mixture of limestone and hydrated lime;
- when CaO < 4*MgO in the composition, then, on the one hand, limestone as usual calcium source is totally replaced by hydrated lime and, on the other hand, the calcium-magnesium source may be dolomite or a mixture of dolomite and hydrated dolime.

For the sake of clarity, in this preferred embodiment :
- when CaO ≥ 4*MgO, there are two options :
   ∘ dolomite is totally replaced by its corresponding hydroxide (i.e. hydrated dolime) and the calcium raw material is limestone; or
   ∘ dolomite is totally replaced by its corresponding hydroxide (i.e. hydrated dolime) and the calcium raw material is a mixture of limestone and hydrated lime (partial replacement of limestone).
- when CaO < 4*MgO, there are also two options :
   ∘ limestone is totally replaced by its corresponding hydroxide (i.e. hydrated lime) and the calcium-magnesium raw material is dolomite; or
   ∘ limestone is totally replaced by its corresponding hydroxide (i.e. hydrated lime) and the calcium-magnesium raw material is a mixture of dolomite and hydrated dolime (partial replacement of dolomite).

In this preferred embodiment:
- when it is said that "calcium raw material is either limestone or a mixture of limestone and hydrated lime", this means that the composition comprises limestone or a mixture of limestone and hydrated lime as exclusive calcium raw material or, in other words, that the composition does not comprise another calcium raw material in a significant amount (namely an amount lower than 5wt%, preferably lower than 2wt%, relative to the total weight of the limestone or the mixture of limestone and hydrated lime); and
- when it is said that "calcium-magnesium raw material is either dolomite or a mixture of dolomite and hydrated dolime", this means that the composition comprises dolomite or a mixture of dolomite and hydrated dolime as exclusive calcium-magnesium raw material or, in other words, that the composition does not comprise another calcium-magnesium raw material in a significant amount (namely an amount lower than 5wt%, preferably lower than 2wt%, relative to the total weight of the dolomite or the mixture of dolomite and hydrated dolime).

Preferably, in said preferred embodiment, when CaO ≥ 4*MgO in the composition and when said at least calcium-magnesium raw material is a mixture of dolomite and hydrated dolime, the amount of hydrated dolime is lower than 40wt% related to the total weight of dolomite and hydrated dolime.

Preferably, in said preferred embodiment, when CaO < 4*MgO in the composition and when said at least calcium raw material is a mixture of limestone and hydrated lime, the amount of hydrated lime is lower than 40wt% related to the total weight of limestone and hydrated lime.

Preferably, in said preferred embodiment, the total weight amount "HC" of hydrated lime and/or hydrated dolime and the total weight amount "CC" of limestone and/or dolomite in said composition is such that the ratio HC/CC ranges between 0.15 to 3.

Preferably also, in said preferred embodiment, the composition has CaO < 4*MgO and comprises :
- 30 to 60 wt% of total calcium (expressed as CaO);
- 5 to 25 wt% of magnesium (expressed as MgO);
- 10 to 40 wt% of total carbonate (expressed as CO₂); and
- 2 to 20 wt% of bound water.

Very preferably, in said preferred embodiment, the composition has CaO < 4*MgO and comprises :
- 30 to 45 wt% of total calcium (expressed as CaO);
- 10 to 20 wt% of magnesium (expressed as MgO);
- 25 to 40 wt% of total carbonate (expressed as CO₂); and
- 2 to 10 wt%, preferably 2 to 8 wt% of bound water.

Alternatively and preferably, in said preferred embodiment, the composition has CaO ≥ 4*MgO and comprises :
- 40 to 70 wt% of total calcium (expressed as CaO);
- 3 to 25 wt% of magnesium (expressed as MgO);
- 10 to 40 wt% of total carbonate (expressed as CO₂); and
- 1 to 20 wt% of bound water.

Very preferably, in said preferred embodiment, the composition has CaO ≥ 4*MgO and comprises :
- 40 to 55 wt% of total calcium (expressed as CaO);
- 3 to 10 wt% of magnesium (expressed as MgO);
- 25 to 40 wt% of total carbonate (expressed as CO₂); and
- 1 to 10 wt% of bound water.

The amount of "bound water" (expressed as H₂O) according to the invention means herein the hydroxide content in the composition as measured by loss on ignition (or LOI) between 250°C and 550°C.

The amount of total carbonate (expressed as CO₂) according to the invention means herein the carbonate content in the composition as measured by loss on ignition (or LOI) between 550°C and 950°C (or up to constant mass).

The LOI, in order to determine the amount of bound water and carbonate in the invention, is obtained commonly using thermogravimetric analysis (TGA) performed by gradually raising the temperature of a sample of the composition, at a rate of 5°C/min from room temperature to at least 950°C (or up to constant mass) in a furnace under a flow of nitrogen, as its weight is measured on an analytical scale. The weight of the sample is plotted against temperature to observe thermal transitions/decompositions that occur upon raising temperature. The hydrated compound(s) (i.e. hydrated lime and/or hydrated dolime) comprised in the composition of the invention decompose(s) between 250°C and 550°C by releasing water (then called "bound water"). The mass loss occurring between 250°C and 550°C corresponds therefore to the amount of "bound water" (expressed as H₂O) according to the invention. The mass loss (release of CO₂) occurring between 550°C and 950°C (or up to constant mass) corresponds to the amount of carbonate (expressed as CO₂) according to the invention.

The composition of the invention may be prepared according to known methods in the art appropriate to blend solid raw materials. The composition may be moisturized with water or a milk of lime or a milk of dolime according to known methods in the art, like typically the ones used by glass makers to moisturize a raw material or a glass batch. Such moisturization helps to decrease further the dust emissions and avoid segregation of the composition during storage or transport of the composition.

By "milk of lime" or "milk of dolime" as commonly adopted in the art, it is meant an aqueous slurry of "hydrated lime" or "hydrated dolime", respectively, that can be obtained by slaking "quicklime" or "dolime" with an excess of water or by slurrying "hydrated lime" or "hydrated dolime" in water. Milks of lime or dolime can have a solid content from 5 to 50 %, the rest being water, and may contain some (organic) additives that stabilize their viscosity and/or avoid the settling of the particles.

Moreover, the invention also relates to the use of the composition of the invention in a glass manufacturing process.

According to a preferred embodiment of the use of the invention, with CaO ≥ 4*MgO in said composition (then with said at least a calcium-magnesium raw material being hydrated dolime). Preferably, said composition has CaO ≥ 4*MgO, with said at least a calcium-magnesium raw material being hydrated dolime and said at least a calcium raw material being limestone. Very preferably, this use of the composition of the invention is in a container glass manufacturing process.

According to another preferred embodiment of the use of the invention, said composition has CaO < 4*MgO, then with said at least a calcium-magnesium raw material being hydrated dolime. Preferably, said composition has CaO < 4*MgO, with said at least a calcium-magnesium raw material being hydrated dolime and said at least a calcium raw material being dolomite. Very preferably, this use of the composition of the invention is in a float glass manufacturing process.

The uses of the invention are very advantageous as they allow to reduce CO₂ emissions of the glass manufacturing process, to increase its pull (due to increased melting kinetics) while keeping dust emissions at acceptable levels despite the (partial) replacement of carbonate(s) by corresponding hydroxide(s).

According to the uses of the invention, the composition of the invention may be added, as a calcium-magnesium raw material, to a glass batch, for example and as commonly known in the art, through a glass batch mixer, without any limitation regarding the way and the order of adding all the raw materials, namely the composition of the invention and the other raw materials. Also, in the uses of the invention, the components of the composition of the invention (namely calcium raw material(s) and the calcium-magnesium raw material(s)) may be "pre-mixed" before their addition to the glass batch or, alternatively, they may be added independently to the glass batch/to the other raw materials. According to the uses of the invention, the composition of the invention may be also used as a glass batch.

The composition of the invention may also be used in a glass manufacturing process for producing fiber glass.

Moreover, the invention also relates to a process of preparing a glass batch from glass raw materials, comprising a step of mixing at least the following raw materials to obtain said glass batch:
- silica sand,
- soda ash (namely sodium carbonate or Na₂CO₃),
- a composition according to the invention, and
- optionally, one or more secondary raw material(s).

The said raw materials according to the process of the invention may be blended by any appropriate method known in the art and in the order the most suitable for the glass manufacturer taking into account, for example, the existing installation or other requirement(s).

In particular, the step of mixing according to the process of the invention may be implemented commonly by adding said raw materials into a glass batch mixer, in the appropriate order and with the appropriate tools (storing silos, dosing means, conveying means, etc.).

According to the process of the invention and depending on the glass furnace and on the targeted glass (i.e. its desired properties in terms of chemical/mechanical resistance, colour,...), said optional one or more secondary raw material(s) may be chosen from the following non-exhaustive list: potash, salt cake (or sodium sulfate, Na₂SO₄), nephelin, feldspar, boron oxide, barium oxide, cullet, coloring agents (cobalt oxide, chromium oxide,...), clarifying agents (cerium oxide,..), oxidizers (sodium nitrate,...), reducing agents (graphite, coke, pyrite,...), decolorizing agents (selenium, cobalt,...).

Preferably, said glass batch has a dust emission defined by a Dust Area (a.u.) below 250, preferably below 200 and, more preferably, below 150, as measured on 100 g of said glass batch in a dry state (taken before any moisturization) and with a measurement time of 30 seconds. By glass batch in a dry state, it is meant herein the composition, as prepared, without adding external water.

According to an embodiment, the process comprises further a step of adding water in an amount ranging from above 0 to 5 wt% (expressed with respect to the total weight of said glass batch in a dry state). Preferably, the process comprises further a step of adding water in an amount ranging from 0.1 to 5 wt%.

According to this embodiment, said water may be added through the addition of a milk of lime and/or a milk of dolime in such amounts that one reaches the desired water amount (expressed with respect to the total weight of said glass batch in a dry state). The amount of milk of lime and/or milk of dolime that may be added to the glass batch depends therefore on its solid content. The higher the solid content, the higher the amount of milk may be added without going above 5 wt% of water added to the dry glass batch. In the case of the addition of a milk of lime and/or a milk of dolime to the dry glass batch, the chemical composition of the milk(s) must be known in order to adapt accordingly the dry glass batch composition.

This additional step of moisturization is advantageous as it allows to decrease further the dust emissions of the glass batch. In particular, quickly after moisturization (e.g. 6h) of said glass batch and up to 24h after said moisturization, the dust emissions of said glass batch is very low, even lower than classical glass batch with limestone and/or dolomite (only carbonate(s) as calcium-magnesium sources).

Preferably, said glass batch has a dust emission defined by a Dust Area (a.u.) below 100, preferably below 75 and, more preferably, below 50, as measured after 24 hours from moisturizing on 100 g of said glass batch in a wet state and with a measurement time of 30 seconds. By glass batch in a wet state, it is meant herein the glass batch in a dry state to which 3 wt% of water has been added. The measurement is carried out roughly 24 hours after adding water.

In a very preferred embodiment, the glass batch has a dust emission defined by a Dust Area (a.u.) below 40, preferably below 25 and, more preferably, below 20, as measured after 24 hours from moisturizing on 100 g of said glass batch in a wet state and with a measurement time of 30 seconds. This is advantageous as this means that the glass batch prepared according to the process of the invention, when moisturized, has an excellent behaviour in terms of dust emissions.

It should be understood that the present invention is not limited to the described embodiments and that variations can be applied without going outside of the scope of the claims. It is further noted that the invention relates to all possible combinations of features, and preferred features, described herein and recited in the claims.

The following examples are provided for illustrative purpose and are not intended to limit the scope of this invention.

### Examples

Glass batches were prepared at lab scale according to the process of the invention, and their behaviour related to dust were evaluated.

### Dust area evaluation

The advantages of the invention in terms of dust emissions were determined by measuring the known parameter called "Dust Area".

The Dust Area were measured with a Microtrac DustMon RD100 from Retsch. This equipment consists of a dosing control system (sample beaker with a valve and a tube), a sample collector, a light source and a detector. The solid sample to measure is poured into the sample beaker. On starting the measurement, the valve opens and the sample drops down the tube into the sample collector. The dust generated in the sample collector is then measured by the detector, based on the obscuration of the light source. In order to be able to compare values between each other, the amount of sample used for the analyses to be compared must be the same, from a sample to another.

The resulting dust concentration is plotted vs time to reach a curve. The analysis is done during 30 seconds with 1000 measurements per second. The area under said curve, called Dust Area, expressed in arbitrary units (a.u.) is determined as an evaluation of the level of dust emissions of the sample.

For the composition according to the invention, the amount of sample used is 50 g, in a dry state (no water added). In such conditions, measurement error is about ± 5 %.

For the glass batches prepared according to the process of the invention, the amount of sample used is fixed at 100 g in a dry state (no water added) or in a wet state (3 wt% water added). In such conditions, measurement error is about ± 5 %.

### Preparation and analysis

Two glass batches aiming at making a float glass were prepared by mixing in a known manner (in a planetary mixer) the following raw materials :
- Batch 1 : silica sand, soda ash, dolomite, limestone, nepheline syenite (NS) and sodium sulfate (NaS) (comparative); and
- Batch 2 : silica sand, soda ash, dolomite, hydrated lime, nepheline syenite (NS) and sodium sulfate (NaS) (invention).

Batch 2 has the same oxide composition as Batch 1 except that, in Batch 2, limestone has been totally replaced by hydrated lime.

The targeted glass batch composition in this example (same for both batches) corresponds to a typical float glass composition and is the following (in weight%): 71.9 % SiO₂, 12.8 % Na₂O, 0.2 % K₂O, 9.4 % CaO, 4.1 % MgO, 1.5 % Al₂O₃, 0.08 % Fe₂O₃ and 0.10 % SOs.

The amounts of each raw materials for both glass batches are given in Table 1, together with the chemical composition of each raw material (expressed as oxides).

**Table 1**

| | Chemical composition of the raw materials | | | | | | | | wt% Batch 1 | wt% Batch 2 |
|---|---|---|---|---|---|---|---|---|---|---|
| | SiO₂ | Na₂O | K₂O | CaO | MgO | Al₂O₃ | Fe₂O₃ | SO₃ | | |
| Silica sand | 99.9 | 0.0 | 0.0 | 0.0 | 0.0 | 0.1 | 0.03 | 0.00 | 57.0 | 57.7 |
| Soda ash | 0.1 | 57.6 | 0.0 | 0.0 | 0.0 | 0.0 | 0.00 | 0.00 | 17.9 | 18.1 |
| Dolomite | 0.1 | 0.1 | 0.0 | 30.8 | 21.0 | 0.1 | 0.23 | 0.04 | 16.0 | 16.2 |
| **Limestone** | 0.2 | 0.0 | 0.0 | 55.3 | 0.4 | 0.0 | 0.06 | 0.01 | **5.0** | **0** |
| **Hydrated lime** | 0.1 | 0.0 | 0.0 | 74.1 | 0.7 | 0.1 | 0.07 | 0.05 | **0** | **3.8** |
| NS | 55.7 | 7.3 | 8.8 | 1.3 | 0.0 | 25.5 | 0.6 | 0.0 | 4.3 | 4.4 |
| NaS | 0.0 | 43.6 | 0.0 | 0.0 | 0.0 | 0.0 | 0.0 | 56.3 | 0.1 | 0.1 |

A sample for each batch ("Dry mix") was taken for dust emission measurements in a dry state. The rest of the batch which remained in the mixer was moisturized by adding 3 wt% of water and mixing once more. The wet batch was then cut into two samples which were stored in closed buckets for 6h and 24h in ambient conditions.

Dust emission was measured on each sample according to the above described procedure: in a dry state and in wet state at t+6h and t+24h after water addition/moisturizing.

### Results

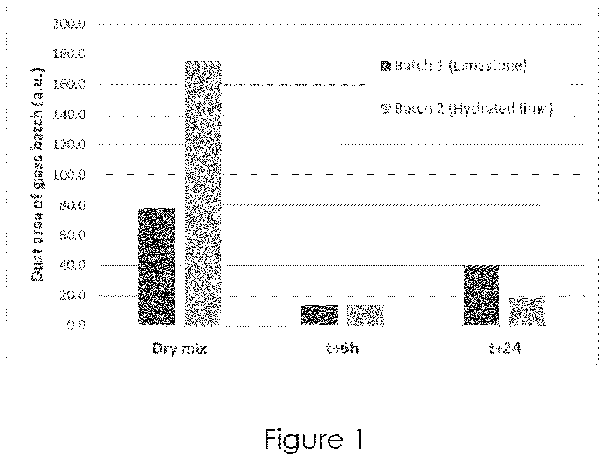

The results of Dust areas measured are shown in Figure1.

As can be seen from Figure 1:
- as expected, as dry mix, the dust emissions of the glass batch with hydrated lime replacing limestone (Batch 2, invention) are larger than the one of the glass batch with limestone as calcium raw material (Batch 1, comparative). However, it remains fully acceptable with a value below 180; and
- After 6h and 24h from moisturizing, the dust emissions of Batch 2 (invention) are similar or even lower (esp. at t+24h) than the one measured for Batch 1 (comparative).

This shows that the invention allows to control dust emissions at acceptable to low values, while having the above-described advantages of using decarbonated raw materials (reduced carbon-footprint, increased pull, etc).

## Claims

1. Composition for its use in a glass manufacturing process, said composition comprising (i) at least a calcium raw material and (ii) at least a calcium-magnesium raw material, with :
- when CaO ≥ 4*MgO in said composition, then said at least a calcium-magnesium raw material is hydrated dolime;
- when CaO < 4*MgO in said composition, then said at least a calcium raw material is hydrated lime;
CaO being the total amount of calcium expressed as CaO in weight percentage in said composition and MgO being the total amount of magnesium expressed as MgO in weight percentage in said composition.

2. Composition according to preceding claim, **characterized in that** it comprises (i) at least a calcium raw material chosen amongst limestone and hydrated lime and (ii) at least a calcium-magnesium raw material chosen amongst dolomite and hydrated dolime, with :
- when CaO ≥ 4*MgO in said composition, then said at least a calcium-magnesium raw material is hydrated dolime and said at least a calcium raw material is either limestone or a mixture of limestone and hydrated lime;
- when CaO < 4*MgO in said composition, then said at least a calcium raw material is hydrated lime and said at least a calcium-magnesium raw material is either dolomite or a mixture of dolomite and hydrated dolime;
CaO being the total amount of calcium expressed as CaO in weight percentage in said composition and MgO being the total amount of magnesium expressed as MgO in weight percentage in said composition.

3. Composition according to preceding claim, **characterized in that** the total weight amount "HC" of hydrated lime and/or hydrated dolime and the total weight amount "CC" of limestone and/or dolomite in said composition is such that the ratio HC/CC ranges between 0.15 to 3.

4. Composition according to any of claims 2 and 3, **characterized in that** it has CaO < 4*MgO and comprises:
- 30 to 60 wt% of total calcium (expressed as CaO);
- 8 to 25 wt% of magnesium (expressed as MgO);
- 10 to 40 wt% of total carbonate (expressed as CO₂);
- 2 to 20 wt% of bound water.

5. Composition according to the preceding claim, **characterized in that** it has CaO < 4*MgO and comprises:
- 30 to 45 wt% of total calcium (expressed as CaO);
- 10 to 20 wt% of magnesium (expressed as MgO);
- 25 to 40 wt% of total carbonate (expressed as CO₂);
- 2 to 10 wt%, preferably 2 to 8 wt% of bound water.

6. Composition according to any of claims 2 and 3, **characterized in that** it has CaO ≥ 4*MgO and comprises :
- 40 to 70 wt% of total calcium (expressed as CaO);
- 3 to 17 wt% of magnesium (expressed as MgO);
- 10 to 40 wt% of total carbonate (expressed as CO₂);
- 1 to 20 wt% of bound water.

7. Composition according to the preceding claim, **characterized in that** has CaO ≥ 4*MgO and comprises :
- 40 to 55 wt% of total calcium (expressed as CaO);
- 3 to 10 wt% of magnesium (expressed as MgO);
- 25 to 40 wt% of total carbonate (expressed as CO₂);
- 1 to 10 wt% of bound water.

8. **Use** of a composition according to claims 1 to 5, in a glass manufacturing process, with CaO < 4*MgO in said composition.

9. Use of a composition according to preceding claim, **characterized in that** said at least a calcium-magnesium raw material being hydrated dolime and said at least a calcium raw material being dolomite.

10. Use of a composition according to claim 8 or 9, in a float glass manufacturing process.

11. **Use** of a composition according to any of claims 1 to 3 or 6 to 7, in a glass manufacturing process, with CaO ≥ 4*MgO in said composition.

12. Use of a composition according to preceding claim, **characterized in that** said at least a calcium-magnesium raw material being hydrated dolime and said at least a calcium raw material being limestone.

13. Use of a composition according to claim 11 or 12, in a container glass manufacturing process.

14. **Process** of preparing a glass batch from glass raw materials, comprising a step of mixing at least the following raw materials to obtain said glass batch:
- silica sand,
- soda ash (namely sodium carbonate or Na₂CO₃),
- a composition according to any of claims 1 to 7, and
- optionally, one or more secondary raw material(s).

15. Process according to the preceding claim, **characterized in that** said glass batch has a dust emission defined by a Dust Area (a.u.) below 250, preferably below 200 and, more preferably, below 150, as measured on 100 g of said glass batch in a dry state and with a measurement time of 30 seconds.
